# EUROPÄISCHE PATENTSCHRIFT

(11) **EP 0 894 992 B1**
(45) Veröffentlichungstag und Bekanntmachung des Hinweises auf die Patenterteilung: **18.12.2002**
(21) Anmeldenummer: 97810542.7
(22) Anmeldetag: 29.07.1997
(51) Int. Cl.: F16C 43/06

(54) **Vorrichtung und Verfahren zum Einsetzen und Befestigen von Kugeln in einem Kugelkäfig einer Längsführung**
Apparatus and method for inserting and retaining balls in a cage of a linear guide
Dispositif et procédé pour introduire et retenir des billes dans la cage d'un palier linéaire

(43) Veröffentlichungstag der Anmeldung: 03.02.1999
(73) Patentinhaber: Agathon A.G. Maschinenfabrik, CH-4500 Solothurn (CH)
(72) Erfinder: Graber, Martin, 3294 Büren A/A (CH)
(74) Vertreter: BOVARD AG - Patentanwälte

(56) Entgegenhaltungen:
- US-A- 2 997 778

## Beschreibung

Die vorliegende Erfindung bezieht sich auf eine Vorrichtung zum Einsetzen und Befestigen von Kugeln in einem Kugelkäfig einer Längsführung gemäss dem Oberbegriff des Patentanspruches 1, sowie einem Verfahren hierzu.

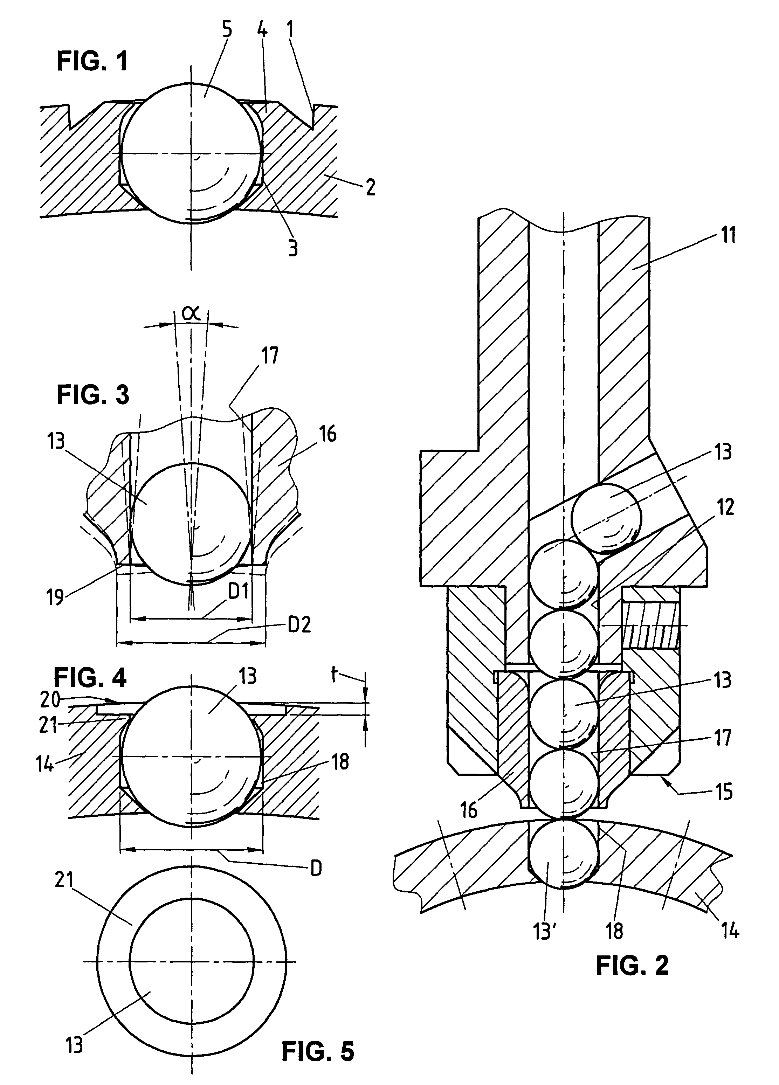

Derartige Vorrichtungen und Verfahren sind bekannt. Die Kugelkäfige sind mit Bohrungen versehen, die innenseitig jeweils mit einem kragenförmigen Rand versehen sind, durch welchen ein Austreten der Kugel auf der Innenseite des Käfigs vermieden wird, die Kugel steht aber über die Oberfläche des Käfigs vor. Nachdem die Kugel in eine entsprechende Bohrung eingesetzt ist, was durch einen Halteteil geschieht, der mit einer Durchgangsöffnung versehen ist, durch welche die Kugeln zugeführt werden können, wird der Halteteil gegen die Oberfläche des Kugelkäfigs gepresst. Der Halteteil ist hierzu am gegen den Kugelkäfig hingerichteten Ende mit einem ringförmigen Werkzeug versehen. Dieses Werkzeug weist einen ringförmigen Arbeitsbereich auf, der als Keil ausgebildet ist. Beim Eindrücken dieses Werkzeuges in die Oberfläche des Kugelkäfigs erfolgt, wie dies in Fig. 1 dargestellt ist, im wesentlichen ein ringförmiger Einschnitt 1 in das Material des Kugelkäfigs 2, wonach das zwischen diesem Einschnitt 1 und der Bohrung 3 sich befindende Material 4 durch die Keilform des Werkzeugs gegen die Bohrung 3 gedrückt wird und so einen Kragen bildet.

Durch diesen Kragen wird die Kugel 5, die in die Bohrung 3 eingesetzt worden ist, im Kugelkäfig 2 gehalten.

Durch dieses vorgängig beschriebene Aufstauchen des Materials des Kugelkäfigs über den gesamten Umfang der Bohrung 3 wird wohl erreicht, dass die in die Bohrung eingesetzte Kugel 5 über den gesamten Umfang der Bohrung 3 gehalten wird. Der für die Haltung wirksame Bereich befindet sich aber am obersten Ende der Bohrung, was zur Folge hat, dass die Kugel mit relativ viel Spiel in der Bohrung des Kugelkäfigs gehalten wird. Damit kann, wenn der Kugelkäfig in die entsprechenden zu führenden Elemente eingesetzt wird, die entsprechenden Kugeln unter Vorspannung gesetzt werden und die Führungsfunktion übernommen werden muss, eine relativ grosse Schlagwirkung entstehen, die die Lebensdauer eines derartigen Kugelkäfigs einschränken kann.

Um mit dem oben beschriebenen Werkzeug und dem entsprechenden Verfahren zum Einsetzen und Befestigen der Kugeln in einem Kugelkäfig das Spiel der Kugel in der Bohrung verkleinern zu können, müsste die Dicke des Kugelkäfigs reduziert werden, wodurch der für die Haltung der Kugel wirksame Bereich, der durch das aufgestauchte Material gebildet wird, tiefer zu liegen käme. Eine Reduktion der Dicke des Kugelkäfigs würde aber eine Schwächung desselben nach sich ziehen, was nicht erwünscht ist.

Die Aufgabe der Erfindung besteht nun darin, die Vorrichtung zum Einsetzen und Befestigen von Kugeln in jeweiligen Bohrungen in einem Kugelkäfig so zu verbessern, dass das Spiel der Kugeln in den jeweiligen Bohrungen reduziert wird.

Erfindungsgemäss erfolgt die Lösung dieser Aufgabe durch die im Anspruch 1 angegebenen Merkmale.

Dadurch, dass das eine Ringform aufweisende stempelförmige Werkzeug eine im wesentlichen ebene Ringfläche als Arbeitsfläche aufweist, wird erreicht, dass das Material des Mündungsbereichs der Bohrung nicht nur radial aufgestaucht wird, sondern dass das radial aufgestauchte Material zusätzlich axial in die Bohrung hinein verschoben wird.

Eine weitere Aufgabe der Erfindung besteht darin, ein Verfahren zum Einsetzen und Befestigen von Kugeln in einem Kugelkäfig unter Verwendung der vorgenannten Vorrichtung zu verwirklichen, das mit den bekannten Anlagen durchgeführt werden kann, was erfindungsgemäss durch die Merkmale des Anspruchs 4 gelöst wird.

Im folgenden wird eine Ausführungsform der Vorrichtung und ein Verfahren der Erfindung anhand der beiliegenden Zeichnung beispielhaft näher erläutert.

Es zeigt
Fig. 2 eine Schnittdarstellung eines Halteteils mit aufgesetztem Werkzeug beim Einsetzen der Kugel in eine Bohrung des Kugelkäfigs;
Fig. 3 eine vergrösserte Schnittdarstellung des Werkzeugs gemäss Fig. 2 mit darin befindlicher Kugel;
Fig. 4 eine Schnittdarstellung durch eine Bohrung des Kugelkäfigs mit eingesetzter und befestigter Kugel; und
Fig. 5 eine Draufsicht auf die Darstellung gemäss Fig. 4.

Der Halteteil 11, dargestellt in Fig. 2, ist in bekannter Weise in einer nicht dargestellten Anlage zum Einsetzen und Befestigen von Kugeln 13 in Kugelkäfigen 14 eingesetzt. Der Halteteil 11 ist mit einer Durchgangsöffnung 12 versehen, durch welchen die Kugeln 13 zugeführt werden. Im dem Kugelkäfig 14 zugewandten Endbereich 15 ist der Halteteil 11 mit einem eine Ringform aufweisenden stempelförmigen Werkzeug 16 ausgerüstet. Dieses Werkzeug 16 verfügt über eine zentrale durchgehende Bohrung 17, die mit der Durchgangsöffnung 12 des Halteteils 11 fluchtet, wenn das Werkzeug 16 in den Halteteil 11 eingesetzt ist.

Ebenfalls in der nicht dargestellten Anlage ist der Kugelkäfig 14 eingesetzt, in welchem die Kugeln 13 anzubringen sind. Der Halteteil 11 und der Kugelkäfig 14 werden in bekannter Weise derart zueinander bewegt, bis jeweils eine Bohrung 18 des Kugelkäfigs 14 mit der zentralen Bohrung 17 des Werkzeugs 16 fluchtend ist. Die unterste Kugel 13' wird in die Bohrung 18 des Kugelkäfigs 14 eingesetzt, der Halteteil 11 wird gegen den Kugelkäfig 14 hin bewegt, das Werkzeug 16 dringt in das Material des Kugelkäfigs 14, der beispielsweise aus Messing, Aluminium oder Kunststoff bestehen kann, ein und staucht dieses auf, wie nachfolgend noch beschrieben wird.

Das Werkzeug 16 weist, wie dies insbesondere in Fig. 3 ersichtlich ist, als Arbeitsfläche eine ebene Ringfläche 19 auf. Diese Ringfläche 19 hat einen Innendurchmesser D1 und einen Aussendurchmesser D2. Der Innendurchmesser D1 entspricht im wesentlichen dem Durchmesser D (Fig. 4) der jeweiligen Bohrungen 18 des Kugelkäfigs 14.

Denkbar ist, dass die Ringfläche 19 bezüglich einer senkrecht zur Längsachse stehenden Ebene über den Umfang geringfügig geneigt ist, wobei der Neigungswinkel etwa in einem Bereich von +5° bis -5° liegen kann, oder dass sie geringfügig konvex geformt ist.

Beim Eindrücken des Werkzeugs 16 in das Material des Kugelkäfigs 14 wird das Werkzeug 16 in bekannter Weise in eine Taumelbewegung versetzt, wie dies in Fig. 3 strichliert und durch die Angabe des Winkels α dargestellt ist.

Das Eindringen des Werkzeugs 16 in das Material im Mündungsbereich 20 der Bohrung 18 des Kugelkäfigs 14, bewirkt, wie in Fig. 4 dargestellt ist, dass das Material um die Eindringtiefe t in den Kugelkäfig 14 eingedrückt wird und ein kragenförmiger Vorsprung 21 als Folge der plastischen Verformung und der Verdrängung des Materials entsteht. Dieser kragenförmige Vorsprung 21 erstreckt sich über den gesamten Umfang der Bohrung 18, wie dies insbesondere auch in Fig. 5 ersichtlich ist. Dieser kragenförmige Vorsprung 21 befindet sich somit in einer Tiefe t von der Oberfläche des Kugelkäfigs 14. Dadurch kann das Spiel der Kugel 13 im Kugelkäfig 14 vermindert werden, wodurch die vorgängig beschriebenen Vorteile erreicht werden. Damit wird auch vermieden, dass der Kugelkäfig 14 die Führungsflächen der entsprechend geführten Teile streift.

Bei einem ersten Ausführungsbeispiel weisen die Kugeln einen Durchmesser von 3 mm auf. Der Innendurchmesser D1 des Werkzeugs 16 misst 3,1 mm, der Aussendurchmesser D2 beträgt 4,2 mm, während die Eindringtiefe t 0,2 mm ist.

Bei einem zweiten Ausführungsbeispiel bei welchem Kugeln mit einem Durchmesser von 4 mm verwendet werden, weist das Werkzeug 16 einen Innendurchmesser D1 von 4,1 mm auf, der Aussendurchmesser D2 beträgt 5,6 mm, die Eindringtiefe t ist 0,2 mm.

Selbstverständlich sind auch Kugeln mit anderen Durchmessern mit dieser Vorrichtung und gemäss diesem Verfahren in einen entsprechenden Kugelkäfig einsetzbar. Hierbei ist die Eindringtiefe t insbesondere auch abhängig vom Differenzmass des Durchmessers D der Bohrung 18 und dem Kugeldurchmesser.

## Patentansprüche

1. Vorrichtung zum Einsetzen und Befestigen von Kugeln (13) in jeweiligen Bohrungen (18) in einem Kugelkäfig (14) zur spielfreien Längsführung eines Profils in einer entsprechenden Führung, welche Vorrichtung einen Halteteil (11) umfasst, der mit einer Durchgangsöffnung (12) versehen ist, durch welche die in den Kugelkäfig (14) einzusetzenden Kugeln (13) zuführbar sind, der mit einem eine Ringform aufweisenden stempelförmigen Werkzeug (16) versehen ist, welches über den Halteteil (11) in den jeweiligen Mündungsbereich (20) der Bohrungen (18) drückbar ist, und somit durch eine plastische Verformung des Materials des Kugelkäfigs (14) im Mündungsbereich (20) der Bohrung ein kragenförmiger Vorsprung (21) entsteht, **dadurch gekennzeichnet, dass** das eine Ringform aufweisende stempelförmige Werkzeug (16) im wesentlichen eine ebene Ringfläche (19) als Arbeitsfläche aufweist, die im wesentlichen senkrecht zu der Längsachse der jeweiligen Bohrung (18) ausgerichtet ist.

2. Vorrichtung nach Anspruch 1, **dadurch gekennzeichnet, dass** die Ringfläche (19) des stempelförmigen Werkzeugs (16) einen Innendurchmesser (D1) aufweist, der im wesentlichen dem Durchmesser (D) der jeweiligen Bohrungen (18) des Kugelkäfigs (14) entspricht, in welche die Kugeln (13) einsetzbar sind.

3. Vorrichtung nach Anspruch 1 oder 2, **dadurch gekennzeichnet, dass** die Ringfläche (19) des stempelförmigen Werkzeugs (16) einen Aussendurchmesser (D2) aufweist, der im wesentlichen dem 1,1 bis 1,5-fachen des Innendurchmessers (D1) entspricht.

4. Verfahren zum Einsetzen und Befestigen von Kugeln (13) in einem Kugelkäfig (14) mit einer Vorrichtung nach einem der Ansprüche 1 bis 3, wobei der Halteteil (11) mit dem eine ebene Ringfläche (19) aufweisenden stempelförmigen Werkzeug (16) jeweils über eine Bohrung (18) des Kugelkäfigs (14) gefahren wird, wobei in die entsprechende Bohrung (18) eine Kugel (13) eingesetzt wird, wobei der Halteteil (11) mit dem stempelförmigen Werkzeug (16) im Mündungsbereich (20) der Bohrung (18) gegen den Kugelkäfig (14) hin verfahren und in diesen hinein gedrückt wird, derart, dass das Material des Kugelkäfigs (14) plastisch verformt und in einer Tiefe (t) von der Oberfläche des Kugelkäfigs (14) weg ein kragenförmiger Vorsprung (21) gebildet wird, der sich radial in Richtung auf die Längsachse der Bohrung (18) erstreckt.

5. Verfahren nach Anspruch 4, **dadurch gekennzeichnet, dass** auf den Halteteil (11) mit dem stempelförmigen Werkzeug (16) während des Eindrückens in das Material des Kugelkäfigs (14) eine Taumelbewegung ausgeübt wird.

6. Verfahren nach Anspruch 4 oder 5, **dadurch gekennzeichnet, dass** der Halteteil (11) mit dem stempelförmigen Werkzeug (16) soweit in den Kugelkäfig (14) eingedrückt wird, bis die Eindringtiefe (t) etwa dem 0,03 bis 0,07-fachem des Innendurchmessers (D1) des ringförmigen Werkzeugs (16) entspricht.

## Claims

1. Device for inserting and fastening balls (13) in respective bores (18) in a ball bearing cage (14) for play-free longitudinal guiding of a profiled section in a corresponding guide, which device comprises a holding part (11), which is provided with a passage (12) through which the balls (13) to be inserted in the ball bearing cage (14) can be admitted, which holding part is equipped with a punching tool (16) having an annular form which can be pressed, via the holding part (11), in the respective orifice area (20) of the bores (18), and a collar-shaped projection (21) being thereby created through a plastic deformation of the material of the ball bearing cage (14) in the orifice area (20) of the bore, **characterised in that** the punching tool having an annular form has substantially a flat annular surface (19) as a working surface, which is directed substantially perpendicular to the longitudinal axis of the respective bore.

2. Device according to claim 1, **characterised in that** the annular surface (19) of the punching tool (16) has an inner diameter (D1) which corresponds substantially to the diameter (D) of the respective bores (18) of the ball bearing cage (14) in which the balls (13) are insertable.

3. The device according to claim 1 or 2, **characterised in that** the annular surface (19) of the punching tool (16) has an outer diameter (D2) which corresponds substantially to 1.1 to 1.5 times the inner diameter (D1).

4. Method of inserting and fastening balls (13) in a ball bearing cage (14) using a device according to one of the claims 1 to 3, the holding part (11) with the punching tool (16) having with a flat annular surface (19) being conducted in each case over a bore (18) of the ball bearing cage (14), a ball (13) being inserted in the respective bore (18), the holding part (11) with the punching tool (16) being conducted against the ball bearing cage (14) in the orifice area (20) of the bore (18) and being pressed therein in such a way that the material of the ball bearing cage is plastically deformed and a collar-shaped projection (21) is formed at a depth (t) away from the surface of the ball bearing cage (14), which projection extends radially toward the longitudinal axis of the bore (18).

5. Method according to claim 4, **characterised in that** a wobbling movement is exercised upon the holding part (11) with the punching tool (16) during the pressing into the material of the ball bearing cage (14).

6. Method according to claim 4 or 5, **characterised in that** the holding part (11) with the punching tool (16) is pressed into the ball bearing cage so far that the depth (t) of penetration corresponds to about 0.03 to 0.07 times the inner diameter (D1) of the annular-shaped tool (16).

## Revendications

1. Dispositif d'introduction et de fixation de billes (13) dans des trous correspondants (18), dans une cage à billes (14), pour le guidage longitudinal sans jeu d'un profilé dans un guidage approprié, ce dispositif comprenant un manche (11) pourvu d'un trou traversant (12) par lequel les billes (13) à mettre en place dans la cage à billes (14) peuvent être amenées et pourvu d'un outil (16) en forme de poinçon, qui peut être pressé, au moyen du manche (11), dans la zone de l'embouchure (20) de chacun des trous (18), ce qui produit, par déformation plastique de la matière constituant la cage à billes (14) dans la zone de l'embouchure (20) du trou, une saillie en forme de couronne (21), **caractérisé en ce que** l'outil (16) en forme de poinçon, qui est de forme annulaire, présente essentiellement une surface annulaire plane (19) comme surface active, qui est sensiblement perpendiculaire à l'axe longitudinal du trou considéré (18).

2. Dispositif selon la première revendication, **caractérisé en ce que** la surface annulaire (19) de l'outil en forme de poinçon (16) a un diamètre intérieur (D1) qui correspond sensiblement au diamètre (D) des trous considérés (18) de la cage à billes (14) dans laquelle les billes (13) doivent être placées.

3. Dispositif selon la revendication 1 ou 2, **caractérisé en ce que** la surface annulaire (19) de l'outil en forme de poinçon (16) a un diamètre extérieur (D2) qui est sensiblement de 1,1 à 1,5 fois le diamètre intérieur (D1).

4. Procédé d'introduction et de fixation de billes (13) dans une cage à billes (14) au moyen d'un dispositif selon l'une des revendications 1 à 3, le manche (11), avec l'outil en forme de poinçon (16) qui présente une surface annulaire plane (19) étant amené à chaque opération au-dessus d'un trou (18) de la cage à billes (14), avec introduction d'une bille (13) dans le trou considéré, le manche (11), avec l'outil en forme de poinçon (16), étant amené, dans la zone de l'embouchure (20) du trou (18), contre la cage à billes (14) et enfoncé dans celle-ci, de telle façon que la matière constituant la cage à billes (14) subisse une déformation plastique et qu'il se forme, à une profondeur (t) par rapport à la surface de la cage à billes (14), une saillie en forme de couronne (21), transversale par rapport à l'axe longitudinal du trou (18).

5. Procédé selon la revendication 4, **caractérisé en ce qu'**un mouvement d'oscillation est imprimé au manche (11), avec l'outil en forme de poinçon (16), pendant qu'il est pressé dans la matière constituant la cage à billes (14).

6. Procédé selon la revendication 4 ou 5, **caractérisé en ce que** le manche (11), avec l'outil en forme de poinçon (16), est enfoncé dans la cage à billes (14) jusqu'à ce que la profondeur de pénétration (t) corresponde environ à 0,03 à 0,07 fois le diamètre intérieur (D1) de l'outil en forme de couronne (16).
